# EUROPEAN PATENT APPLICATION

(11) **EP 4 506 857 A1**
(43) Date of publication of application: **12.02.2025**
(21) Application number: 24192862.1
(22) Date of filing: 05.08.2024
(51) Int. Cl.: G06N 3/063

(54) **IN-STORAGE MACHINE LEARNING OPERATIONS**

(30) Priority: 09.08.2023 US 202363531732 P; 26.09.2023 US 202318475141
(71) Applicant: SAMSUNG ELECTRONICS CO., LTD., Yeongtong-gu Suwon-si, Gyeonggi-do 16677 (KR)
(72) Inventor: KIM, Jaeyoon, San Jose, CA, 95134 (US); CHOI, Joon Hee, San Jose, CA, 95134 (US); CHOI, Chiho, San Jose, CA, 95134 (US); MALLA, Srikanth, San Jose, CA, 95134 (US)
(74) Representative: Kuhnen & Wacker Patent- und Rechtsanwaltsbüro PartG mbB

(57) **Abstract**

A system and method for in-storage machine learning operations. In some embodiments, a system includes a first persistent memory, and a control and inference circuit. The first persistent memory may be connected to the control and inference circuit by a wideband data connection, and the control and inference circuit may be configured to perform arithmetic operations.

## Description

### FIELD

One or more aspects of embodiments according to the present disclosure relate to machine learning, and more particularly to a system and method for in-storage inference.

### BACKGROUND

Machine learning can be useful for various classification and generation operations. Inference operations in a large machine learning models may use significant amounts of data and significant processing resources.

It is with respect to this general technical environment that aspects of the present disclosure are related.

### SUMMARY

According to an embodiment of the present disclosure, there is provided a system, including: a first persistent memory; and a control and inference circuit, wherein: the first persistent memory is connected to the control and inference circuit by a wideband data connection; and the control and inference circuit is configured to perform arithmetic operations.

In some embodiments: the control and inference circuit includes a first persistent memory controller; the system further includes: an interface circuit, a second persistent memory, and a second persistent memory controller; the second persistent memory is connected to the second persistent memory controller; the control and inference circuit is connected to the interface circuit; and the second persistent memory controller is connected to the interface circuit.

In some embodiments, the system further includes: an interface circuit, wherein: the interface circuit includes a serial interface; and the control and inference circuit is connected to the interface circuit.

In some embodiments, the system further includes: an interface circuit; a second persistent memory; and a second persistent memory controller, wherein: the control and inference circuit includes a first persistent memory controller; the interface circuit includes a serial interface; the control and inference circuit is connected to the interface circuit; and the second persistent memory is connected to the interface circuit.

In some embodiments, the system further includes: a second persistent memory, and a second persistent memory controller, wherein: the control and inference circuit includes a first persistent memory controller, the first persistent memory includes a flash memory, the second persistent memory includes a flash memory, the first persistent memory controller includes a first flash memory controller, and the second persistent memory controller includes a second flash memory controller.

In some embodiments, the wideband data connection includes a serial connection.

In some embodiments, the system further includes: a first interface circuit, and an artificial intelligence accelerator, the artificial intelligence accelerator including an artificial intelligence processing circuit and a second interface circuit, wherein: the first interface circuit is connected to the second interface circuit, the artificial intelligence accelerator is configured to perform inference operations of a neural network, with assistance from: the first persistent memory, and the control and inference circuit.

In some embodiments, the system further includes: a first interface circuit, and an artificial intelligence accelerator connected to the first interface circuit, wherein: the artificial intelligence accelerator is configured to perform inference operations of a neural network, with assistance from: the first persistent memory, and the control and inference circuit; and the first persistent memory and the control and inference circuit are configured to perform an operation selected from the group consisting of pruning, sparsity, compression, quantization, and approximation.

In some embodiments: the first persistent memory is part of a first semiconductor die; and the control and inference circuit is part of a second semiconductor die.

In some embodiments: the first persistent memory is part of a first semiconductor die; the control and inference circuit is part of a second semiconductor die; and the first semiconductor die and the second semiconductor die are part of a stack of dies.

In some embodiments, the system includes a random-access memory, wherein: the first persistent memory is part of a first semiconductor die; the control and inference circuit is part of a second semiconductor die; the random access memory is part of a third semiconductor die; and the first semiconductor die, the second semiconductor die, and the third semiconductor die are part of a stack of dies.

In some embodiments, the system includes a random-access memory, wherein: the first persistent memory is part of a first semiconductor die; the control and inference circuit is part of a second semiconductor die; the random-access memory is part of a third semiconductor die; and the first semiconductor die is stacked on: the second semiconductor die, and the third semiconductor die.

In some embodiments, the system includes a random-access memory, wherein: the control and inference circuit includes: a persistent memory controller; and a multiply-accumulate circuit; the first persistent memory is part of a first semiconductor die; the persistent memory controller is part of a second semiconductor die; the multiply-accumulate circuit is part of a third semiconductor die; the random-access memory is part of a fourth semiconductor die; and the first semiconductor die is stacked on: the second semiconductor die, the third semiconductor die, and the fourth semiconductor die.

According to an embodiment of the present disclosure, there is provided a method, including: performing an inference operation of a neural network, the performing including: reading a weight from a persistent memory into a random-access memory; multiplying the weight by an element of an input feature map to form a first product; and calculating an activation based on the first product, wherein the reading of the weight from the persistent memory into the random-access memory includes reading the weight from the persistent memory into the random-access memory through a wideband data connection.

In some embodiments, the method further includes storing the activation in the random-access memory.

In some embodiments: the performing of the inference operation includes performing the inference operation in a system including: the persistent memory, and a control and inference circuit; the control and inference circuit is connected to the persistent memory by the wideband data connection; and the control and inference circuit includes: a persistent memory controller; and a multiply-accumulate circuit.

According to an embodiment of the present disclosure, there is provided a device, including: a connector; a first persistent memory; and a control and inference circuit, wherein: the first persistent memory is connected to the control and inference circuit by a wideband data connection; and the connector is suitable for connecting the device to a mobile computing device.

In some embodiments: the control and inference circuit includes a first persistent memory controller; the device further includes: an interface circuit, a second persistent memory, and a second persistent memory controller; the second persistent memory is connected to the second persistent memory controller; the control and inference circuit is connected to the interface circuit; and the second persistent memory controller is connected to the interface circuit.

In some embodiments: the first persistent memory and the control and inference circuit are configured to perform an operation selected from the group consisting of pruning, sparsity, compression, quantization, and approximation.

In some embodiments: the first persistent memory is part of a first semiconductor die; and the control and inference circuit is part of a second semiconductor die.

### BRIEF DESCRIPTION OF THE DRAWINGS

These and other features and advantages of the present disclosure will be appreciated and understood with reference to the specification, claims, and appended drawings wherein:
FIG. 1A is a block diagram of a host and a storage device, according to an embodiment of the present disclosure;
FIG. 1B is a block diagram of a storage device, according to an embodiment of the present disclosure;
FIG. 1C is a system level block diagram, according to an embodiment of the present disclosure;
FIG. 1D is a system level diagram of a host and a persistent storage device having inference capabilities, according to an embodiment of the present disclosure;
FIG. 1E is a schematic perspective view of stacked packaging of dies, according to an embodiment of the present disclosure;
FIG. 2 is a block diagram of an artificial intelligence accelerator and a persistent storage device having inference capabilities, according to an embodiment of the present disclosure;
FIG. 3 is a system level diagram of a portable computing device and a persistent storage device having inference capabilities, according to an embodiment of the present disclosure; and
FIG. 4 is a flow chart of a method, according to an embodiment of the present disclosure.

### DETAILED DESCRIPTION

The detailed description set forth below in connection with the appended drawings is intended as a description of exemplary embodiments of a system and method for in-storage inference provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

Machine learning operations, such as neural network inference operations, may involve calculating products of weights and elements of an input feature map. In a large neural network, a large number of such products may be computed for each inference operation, or for each layer of the neural network, for each inference operation. The weights may be stored in a persistent storage device (discussed in further detail below). The persistent storage device may be connected to a host. The host may include a processing circuit (for example, a central processing unit (CPU) and main memory or system memory). In operation, the host may receive the elements of an input feature map as input or the host (for example, the processing circuit of the host) may compute an output feature map for one layer and the elements of an input feature map for the next layer may be the elements of the computed output feature map.

The host may read the weights from the persistent storage into the system memory and the processing circuit of the host may perform the calculations of the products of the weights and the elements of the input feature map. This process may be repeated for each of potentially many layers of the neural network.

The process of reading weights from persistent storage may consume a significant amount of power and may also cause a significant amount of delay because of the finite latency and bandwidth of the connection between the host and the persistent storage device. Moreover, the calculating of weights in the host may consume power in the processing circuit and in the system memory, and the calculating of weights in the host may consume cycles of the processing circuit and of the memory that otherwise may be used for other processing tasks. This use of the processing circuit of the host and of the system memory of the host may therefore cause a degradation in system performance.

In some embodiments, therefore, machine learning operations (for example, neural network inference operations) may be performed in a persistent storage device. An inference operation of a neural network may involve calculating products of (i) weights and (ii) elements of an input feature map, summing such products, and calculating an activation function based on such sums. In some embodiments, the weights for a layer of a neural network, or all of the weights for the entire neural network, may be stored in persistent memory of a persistent storage device. The persistent storage device may also have dedicated circuitry for performing neural network inference operations.

For example, the persistent storage device may include a persistent memory (which may store weights), a random-access memory (for example, a static random-access memory) and a multiply-accumulate circuit. In operation, the persistent storage device may receive elements of the input feature map (for example, from a host connected to the persistent storage device or from an artificial intelligence accelerator connected to the persistent storage device); the persistent storage device may store these elements of the input feature map in the random-access memory. The persistent storage device may then compute (using the weights stored in the persistent memory and the processing capabilities of the multiply-accumulate circuit) an output value (for example, a sum of products of weights and elements of the input feature map, or an activation value that results from evaluating an activation function for such a sum of products) and return the output value (for example, to the host or to the artificial intelligence accelerator). In some embodiments, the persistent storage device may have the form factor of a dongle and may be configured to be plugged into a portable computing device to enhance the neural network inference capabilities of the portable computing device.

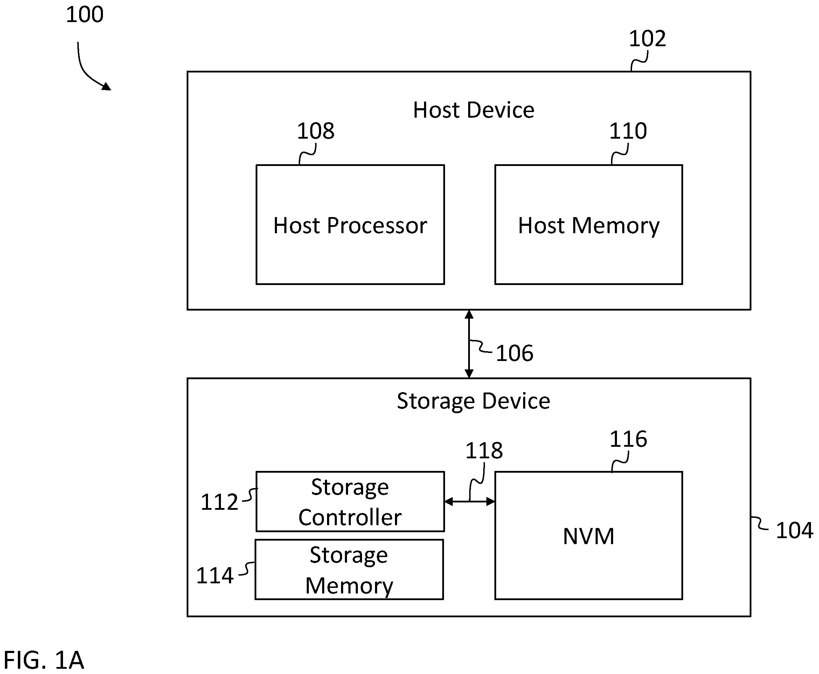

FIG. 1A illustrates a system, which may be referred to as a server 100, in accordance with some example embodiments of the disclosure. Referring to FIG. 1A, the server 100 may include a host device (or simply "host") 102 and a storage device 104 (which may be a persistent storage device 104). In some embodiments, the host device 102 may be housed with the persistent storage device 104, and in other embodiments, the host device 102 may be separate from the persistent storage device 104. The host device 102 may include any suitable computing device connected to a persistent storage device 104 such as, for example, a personal computer (PC), a portable electronic device, a hand-held device, a laptop computer, or the like.

The host device 102 may be connected to the persistent storage device 104 over a host interface 106. The host device 102 may issue data request commands or input-output (IO) commands (for example, read or write commands) to the persistent storage device 104 over the host interface 106, and may receive responses from the persistent storage device 104 over the host interface 106.

The host device 102 may include a host processor 108 and host memory 110. The host processor 108 may be a processing circuit (discussed in further detail below), for example, such as a general purpose processor or a central processing unit (CPU) core of the host device 102.

The host processor 108 may be connected to other components via an address bus, a control bus, a data bus, or the like. The host memory 110 may be considered as high performing main memory (for example, primary memory) of the host device 102. For example, in some embodiments, the host memory 110 may include (or may be) volatile memory, for example, such as dynamic random-access memory (DRAM). However, the present disclosure is not limited thereto, and the host memory 110 may include (or may be) any suitable high performing main memory (for example, primary memory) replacement for the host device 102 as would be known to those skilled in the art. For example, in other embodiments, the host memory 110 may be relatively high performing non-volatile memory, such as NAND flash memory, Phase Change Memory (PCM), Resistive RAM, Spin-transfer Torque RAM (STTRAM), any suitable memory based on PCM technology, memristor technology, or resistive random access memory (ReRAM), and may include, for example, chalcogenides, or the like.

The persistent storage device 104 may operate as secondary memory that may persistently store data accessible by the host device 102. In this context, the persistent storage device 104 may include relatively slower memory when compared to the high performing memory of the host memory 110.

For example, in some embodiments, the persistent storage device 104 may be secondary memory of the host device 102, for example, such as a Solid-State Drive (SSD). However, the present disclosure is not limited thereto, and in other embodiments, the storage device 104 may include (or may be) any suitable storage device such as, for example, a magnetic storage device (for example, a hard disk drive (HDD), or the like), an optical storage device (for example, a Blue-ray disc drive, a compact disc (CD) drive, a digital versatile disc (DVD) drive, or the like), other kinds of flash memory devices (for example, a USB flash drive, and the like), or the like.

In various embodiments, the persistent storage device 104 may conform to a large form factor standard (for example, a 3.5 inch hard drive form-factor), a small form factor standard (for example, a 2.5 inch hard drive form-factor), an M.2 form factor, an E1.S form factor, or the like. In other embodiments, the persistent storage device 104 may conform to any suitable or desired derivative of these form factors. For convenience, the persistent storage device 104 may be described hereinafter in the context of a solid-state drive, but the present disclosure is not limited thereto.

The persistent storage device 104 may be communicably connected to the host device 102 over the host interface 106. The host interface 106 may facilitate communications (for example, using a connector and a protocol) between the host device 102 and the persistent storage device 104. In some embodiments, the host interface 106 may, for example, facilitate the exchange of storage requests (or "commands") and responses (for example, command responses) between the host device 102 and the persistent storage device 104. In some embodiments, the host interface 106 may facilitate data transfers by the persistent storage device 104 to and from the host memory 110 of the host device 102.

For example, in various embodiments, the host interface 106 (for example, the connector and the protocol thereof) may include (or may conform to) Small Computer System Interface (SCSI), Non Volatile Memory Express (NVMe), Peripheral Component Interconnect Express (PCIe), remote direct memory access (RDMA) over Ethernet, Serial Advanced Technology Attachment (SATA), Fiber Channel, Serial Attached SCSI (SAS), NVMe over Fabric (NVMe-oF), or the like. In other embodiments, the host interface 106 (for example, the connector and the protocol thereof) may include (or may conform to) various general-purpose interfaces, for example, such as Ethernet, Universal Serial Bus (USB), and/or the like.

In some embodiments, the persistent storage device 104 may include a persistent memory controller (or "storage controller") 112, storage memory 114 (which may also be referred to as a buffer), non-volatile memory (NVM) 116, and a storage interface 118. The storage memory 114 may be high-performing memory of the persistent storage device 104, and may include (or may be) volatile memory, for example, such as DRAM, but the present disclosure is not limited thereto, and the storage memory 114 may, for example, be any suitable kind of high-performing volatile or non-volatile memory.

The non-volatile memory 116 may persistently store data received, for example, from the host device 102. The non-volatile memory 116 may include, for example, NAND flash memory, but the present disclosure is not limited thereto, and the non-volatile memory 116 may include any suitable kind of memory for persistently storing the data according to an implementation of the persistent storage device 104 (for example, magnetic disks, tape, optical disks, or the like).

The persistent memory controller 112 may be connected to the non-volatile memory 116 over the storage interface 118. In the context of the SSD, the storage interface 118 may be referred to as flash channel, and may be an interface with which the non-volatile memory 116 (for example, NAND flash memory) may communicate with a processing component (for example, the persistent memory controller 112) or other device. Commands such as reset, write enable, control signals, clock signals, or the like may be transmitted over the storage interface 118.

In some embodiments, a software interface may be used in combination with a hardware element that may be used to test or verify the workings of the storage interface 118. The software may be used to read data from and write data to the non-volatile memory 116 via the storage interface 118. In some embodiments, the software may include firmware that may be downloaded onto hardware elements (for example, for controlling write, erase, and read operations).

The persistent memory controller 112 (which may be a processing circuit (discussed in further detail below)) may be connected to the host interface 106, and may, for example, manage signaling over the host interface 106. In some embodiments, the persistent memory controller 112 may include an associated software layer (for example, a host interface layer) to manage the physical connector of the host interface 106. The persistent memory controller 112 may respond to input or output requests received, for example, from the host device 102 over the host interface 106. The persistent memory controller 112 may also manage the storage interface 118, for example to control, and to provide access to and from, the non-volatile memory 116.

For example, the persistent memory controller 112 may include at least one processing component embedded therein for interfacing with the host device 102 and the non-volatile memory 116. The processing component may include, for example, a general purpose digital circuit (for example, a microcontroller, a microprocessor, a digital signal processor, or a logic device (for example, a field programmable gate array (FPGA), an application-specific integrated circuit (ASIC), or the like)) capable of executing data access instructions (for example, via firmware or software) to provide access to the data stored in the non-volatile memory 116 according to the data access instructions. For example, the data access instructions may correspond to the data request commands, and may include any suitable data storage and retrieval algorithm (for example, read, write, or erase) instructions, or the like.

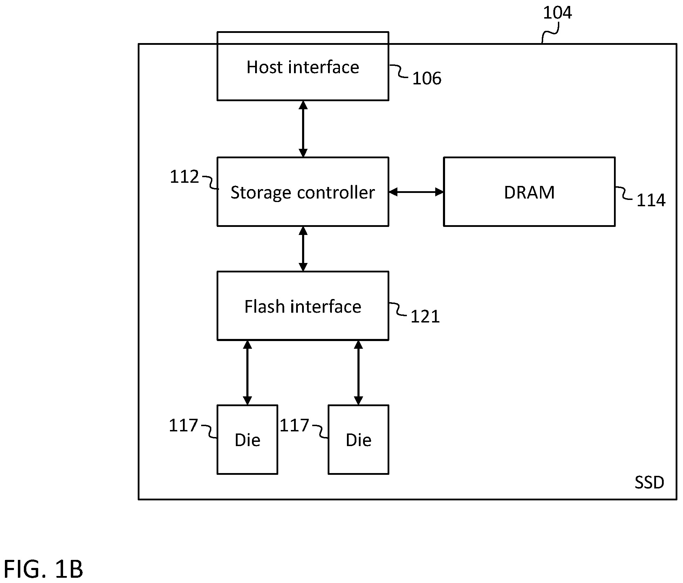

FIG. 1B is a block diagram of a persistent storage device 104 (for example, a solid-state drive), in accordance with some example embodiments of the disclosure. The host interface 106 is used by the host 102, to communicate with the persistent storage device 104.

The data write and read input output commands, as well as various media management commands such as the nonvolatile memory express (NVMe) Identify command and the NVMe Get Log command may be received, by the persistent storage device 104, through the host interface 106. The host interface 106 may also be used by the persistent storage device 104 to perform data transfers to and from host system memory. The persistent storage device 104 may store data in non-volatile memory 116 (for example, not-AND (NAND) flash memory), for example, in memory dies 117 containing memory cells, each of which may be (as discussed above), for example, a Single-Level Cell (SLC), a Multi-Level Cell (MLC), or a Triple-Level Cell (TLC). A Flash Translation Layer (FTL), which may be implemented in the persistent memory controller 112 (for example, based on firmware (for example, based on firmware stored in the non-volatile memory 116)) may provide a mapping between logical addresses used by the host and physical addresses of the data in the non-volatile memory 116.

The persistent storage device 104 may also include (i) a buffer (for example, the storage memory 114) (which may include, for example, consist of, dynamic random-access memory (DRAM)), and (ii) a flash interface (or "flash controller") 121 for providing suitable signals to the memory dies 117 of the non-volatile memory 116. Some or all of the host interface 106, the Flash Translation Layer (as mentioned above), the storage memory 114 (for example, the buffer), and the flash interface 121 may be implemented in a processing circuit, which may be referred to as the persistent storage device controller 112 (or simply as the persistent memory controller 112).

The NAND flash memory may be read or written at the granularity of a flash page, which may be between 8 kB and 16 kB in size. Before the flash memory page is reprogrammed with new data, the flash memory page may first be erased. The granularity of an erase operation may be one NAND block, or "physical block", which may include, for example, between 128 and 256 pages.

Because the granularity of erase and program operations are different, garbage collection (GC) may be used to free up partially invalid physical blocks and to make room for new data. The garbage collection operation may (i) identify fragmented flash blocks, in which a large proportion (for example, most) of the pages are invalid, and (ii) erase each such physical block. When garbage collection is completed, the pages in an erased physical block may be recycled and added to a free list in the Flash Translation Layer.

The non-volatile memory 116 (for example, if the non-volatile memory 116 includes or is flash memory) may be capable of being programmed and erased only a limited number of times. This may be referred to as the maximum number of program/erase cycles (P/E cycles) the non-volatile memory 116 can sustain. To maximize the life of the persistent storage device 104, the persistent storage device controller 112 may endeavor to distribute write operations across all of the physical blocks of the non-volatile memory 116; this process may be referred to as wear-leveling.

A mechanism that may be referred to as "read disturb" may reduce persistent storage device reliability. A read operation on a NAND flash memory cell may, for example, cause the threshold voltage of nearby unread flash cells in the same physical block to change. Such disturbances may change the logical states of the unread cells, and may lead to uncorrectable error-correcting code (ECC) read errors, degrading flash endurance.

To avoid this result, the Flash Translation Layer may have a counter of the total number of reads to a physical block since the last erase operation. The contents of the physical block may be copied to a new physical block, and the physical block may be recycled, when the counter exceeds a threshold (for example, 50,000 reads for Multi-Level Cell), to avoid irrecoverable read disturb errors. As an alternative, in some embodiments, a test read may periodically be performed within the physical block to check the error-correcting code error rate; if the error rate is close to the error-correcting code capability, the data may be copied to a new physical block.

Because of the relocation of data performed by various operations (for example, garbage collection) in the persistent storage device 104, the amount of data that is erased and rewritten may be larger than the data written to the persistent storage device 104 by the host. Each time data are relocated without being changed by the host system, a quantity referred to as write amplification is increased, and the life of the non-volatile memory 116 may be reduced. Write amplification may be measured as the ratio of (i) the number of writes committed to the flash memory to (ii) the number of writes coming from the host system.

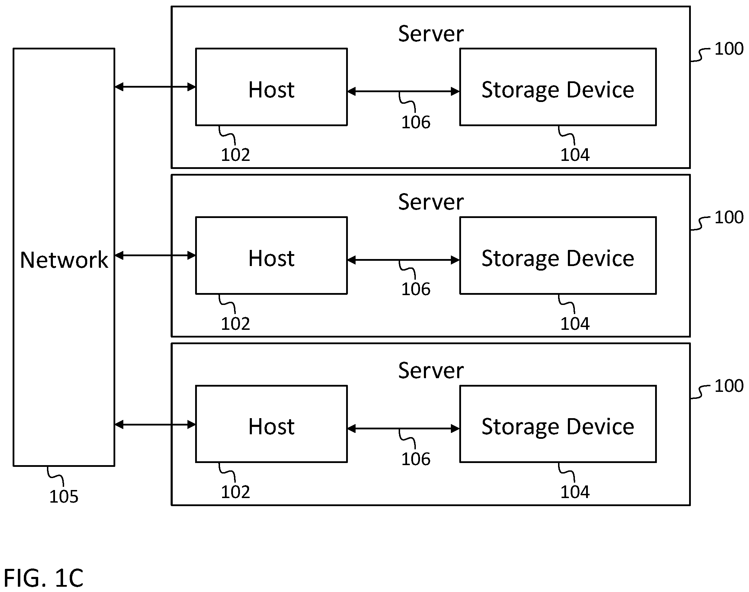

FIG. 1C is a system-level diagram of a system capable of performing in-storage machine learning operations, in accordance with some example embodiments of the disclosure. Within each server 100, a host 102 is connected to a persistent storage device 104 (which may be, for example, a solid state drive (SSD)). The persistent storage device 104 may have (as in the embodiments of FIGs. 1A and 1B) a form factor that is any one of a plurality of form factors suitable for persistent storage devices, including but not limited to a 2.5" form factor, a 1.8" form factor, a MO-297 form factor, a MO-300 form factor, a M.2 form factor, and Enterprise and Data Center SSD Form Factor (EDSFF).

The persistent storage device 104 may have an electrical interface (which may be referred to as a "host interface") 106, through which the persistent storage device 104 may be connected to the host 102, that (as in the embodiments of FIGs. 1A and 1B) may be any one of a plurality of interfaces suitable for persistent storage devices, including Peripheral Component Interconnect (PCI), PCI express (PCIe), Ethernet, Small Computer System Interface (SCSI), Serial AT Attachment (SATA), and Serial Attached SCSI (SAS) or Universal Flash Storage (UFS). A Universal Flash Storage may include a plurality of serial interfaces each of which may include a full duplex high-speed serial lane. The persistent storage device 104 may include an interface circuit which operates as an interface adapter between the host interface 106 and one or more internal interfaces in the persistent storage device 104.

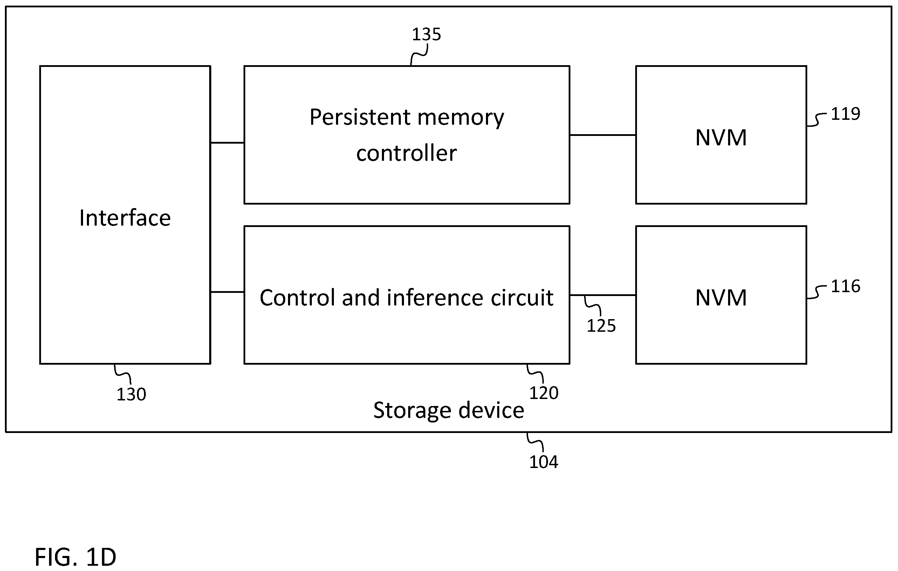

As used herein, "persistent memory" means non-volatile memory , for example, persistent memory is non-volatile memory, which may continue to store data when electrical power is not supplied to the persistent memory. The persistent storage device 104 may include an interface circuit 130 (FIG. 1D) which operates as an interface adapter between the host interface and one or more internal interfaces in the persistent storage device 104.

The host interface may be used by the host 102, to communicate with the persistent storage device 104, for example, by sending write and read commands, which may be received, by the persistent storage device 104, through the host interface 106. In some embodiments, the host 102 may send elements of an input feature map to the persistent storage device 104 through the host interface 106 and the persistent storage device 104 may calculate products of the elements of the input feature map and the weights. The host interface may also be used by the persistent storage device 104 to perform data transfers to and from system memory of the host 102. Such data transfers may be performed using direct memory access (DMA). For example, when the host 102 sends a write command to the persistent storage device 104, the persistent storage device 104 may fetch the data to be written to the non-volatile memory 116 from the host memory 110 of the host device 102 using direct memory access, and the persistent storage device 104 may then save the fetched data to the non-volatile memory 116.

Similarly, if the host 102 sends a read command to the persistent storage device 104, the persistent storage device 104 may read the requested data (i.e., the data specified in the read command) from the non-volatile memory 116 and save the requested data in the host memory 110 of the host device 102 using direct memory access. The persistent storage device 104 may store data in a persistent memory, for example, not-AND (NAND) flash memory, for example, in memory dies containing memory cells, each of which may be, for example, a Single-Level Cell (SLC), a Multi-Level Cell (MLC), or a Triple-Level Cell (TLC).

The persistent storage device 104 may (as in the embodiments of FIGs. 1A and 1B) store data in a persistent memory, for example, not-AND (NAND) flash memory, for example, in memory dies containing memory cells, each of which may be, for example, a Single-Level Cell (SLC), a Multi-Level Cell (MLC), or a Triple-Level Cell (TLC), and/or the like.

A Flash Translation Layer (FTL) of the persistent storage device 104 may provide a mapping between logical addresses used by the host 102 and physical addresses of the data in the persistent memory. The persistent storage device 104 may also include (i) a buffer (which may include, for example, consist of, dynamic random-access memory (DRAM)), and (ii) a persistent memory controller (for example, a flash controller) for providing suitable signals to the persistent memory. Some or all of the host interface, the Flash Translation Layer, the buffer, and the persistent memory controller may be implemented in a processing circuit, which may be referred to as the persistent storage device controller.

The system of FIG. 1C may be employed to perform various calculations, including inference calculations of a neural network, in various ways. To perform an inference calculation for a neural network, for example, the host 102 of one of the servers 100 may read the weights for a layer of the neural network from the persistent storage device 104, and the host 102 may multiply each weight by a respective element of an input feature map, to form a respective product, and the host 102 may sum the products. The host 102 may then compute an activation based on the sum.

In some embodiments, some or all of the computations that in some embodiments are performed by a host 102 may be performed at least in part by the persistent storage device 104. For example, the persistent storage device 104 may include, as shown, the non-volatile memory 116 and a control and processing circuit which may be referred to as a control and inference circuit 120. The control and inference circuit 120 may include, for example, in one integrated circuit (or, in separate integrated circuits, as shown, for example, in FIG. 1D), a persistent memory controller 112 and also an inference processing circuit 122. The control and inference circuit 120 may be a processing circuit or the control and inference circuit 120 may include one or more processing circuits (discussed in further detail below).

In some embodiments, the persistent memory controller of the control and inference circuit 120 and the inference processing circuit of the control and inference circuit 120 can be fabricated as separate integrated circuits, for example, on separate semiconductor dies. These dies may be connected together by suitable interconnects using, for example, wire bonds or traces in a redistribution layer as conductors. The connections may be a plurality of serial connections, with a plurality of serial transceivers (each of which may comply with a suitable serial interface standard, such as extra short reach (XSR) or ultra short reach (USR)).

The non-volatile memory 116 and the control and inference circuit 120 may be connected by a wideband data connection 125. As used herein, a "wideband data connection" can include a data connection with a bandwidth of a predetermined threshold (for example, at least 5 gigabits per second). In some embodiments, the wideband data connection 125 has a bandwidth of between 5 gigabits per second and 100 gigabytes per second. The wideband data connection 125 may be implemented using Peripheral Component Interconnect Express (PCIe) (with a sufficient number of lanes (each of which may be or include a serial connection) to achieve the desired bandwidth) or with (for example, with multiple lanes of) serial connections conforming to another serial connection standard (such as Medium Reach (MR) or Very Short Reach (VSR)). In some embodiments, the non-volatile memory 116 is sufficiently large to store the entire model for a large neural network (for example, a Generative Pre-Trained Transformer (GPT)), for example, the non-volatile memory 116 may store all of the weights for such a model. In some embodiments, the non-volatile memory 116 has a capacity of a predetermined threshold (for example, at least 1 gigabyte).

The inference processing circuit of the control and inference circuit 120 may include a circuit configured to perform arithmetic operations, for example, a multiply-accumulate circuit configured to efficiently perform the multiplication of weights by the elements of the input feature map to form products, and to accumulate (for example, to sum) the products. The control and inference circuit 120 may include a random-access memory 123 (FIG. 1D), which may be part of the inference processing circuit of the control and inference circuit 120, or which may be a separate element of the control and inference circuit 120. The random-access memory 123 may be, for example, static random-access memory (SRAM) or dynamic random-access memory (DRAM).

In operation, when instructed by the host 102 to execute an inference operation, or a portion of an inference operation, the control and inference circuit 120 may read the weights (for example, a portion of the weights corresponding to a layer of the neural network, or all of the weights corresponding to a layer of the neural network) from the non-volatile memory 116 into the random-access memory 123, and the multiply-accumulate circuit may perform multiply and accumulate operations, for example, the multiplication and summation (for example, accumulation) operations for the inference operation.

The use of a wideband data connection 125 for the reading of the weights from the non-volatile memory 116 may enable the persistent storage device 104 to perform this inference operation significantly more quickly than if the inference operation were performed in the host 102, after reading, by the host 102, of the weights from the persistent storage device 104. In some embodiments, the operations of which the control and inference circuit 120 is capable of include inference operations in support of such operations as automatic speech recognition, natural language processing, and text to speech.

The persistent storage device 104 may include, as mentioned above, an interface circuit 130, which may operate to provide a host interface to the host 102. The interface circuit 130 may operate as an interface adapter between the host 102 and the control and inference circuit 120, to which the interface circuit 130 may be connected by a data connection conforming to any standard suitable for internal connections within a persistent storage device 104, such as Peripheral Component Interconnect Express (PCIe) or another serial connection standard (such as Medium Reach (MR) or Very Short Reach (VSR)).

As illustrated in FIG. 1D (which shows a block diagram of a persistent storage device having inference capabilities in accordance with some example embodiments of the disclosure), the persistent storage device 104 may also include an additional or "auxiliary" persistent memory 117 and an auxiliary persistent memory controller 135, which, together with the interface circuit 130 may enable the persistent storage device 104 to provide persistent storage (for example, without in-device processing) to the host 102. Such a capability may be used, for example, to store user data (for example, images, or sound files) or applications, or an operating system for the host 102.

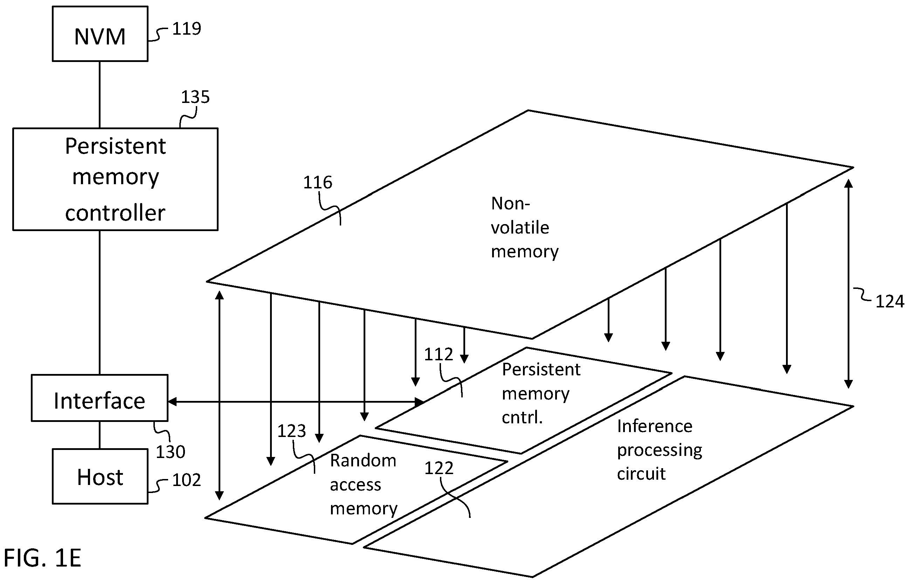

Referring to FIG. 1E (which shows a schematic perspective view of stacked packaging of dies in accordance with some example embodiments of the disclosure), the non-volatile memory 116, the persistent memory controller 112, the inference processing circuit 122, and the random-access memory 123 may be fabricated on separate semiconductor dies, and they may be packaged in a stacked (three-dimensional) package, with, for example, the non-volatile memory 116 stacked on (i) the persistent memory controller 112, (ii) the inference processing circuit 122, and (iii) the random-access memory 123. This stacked packaging may make it possible to provide a large number of conductive connections 124 (of which only a small number are illustrated, for ease of illustration), some of which may be used to implement the wideband data connection 125. The stack of dies may be packaged in a System In Package (SiP) or Multichip Package (MCP).

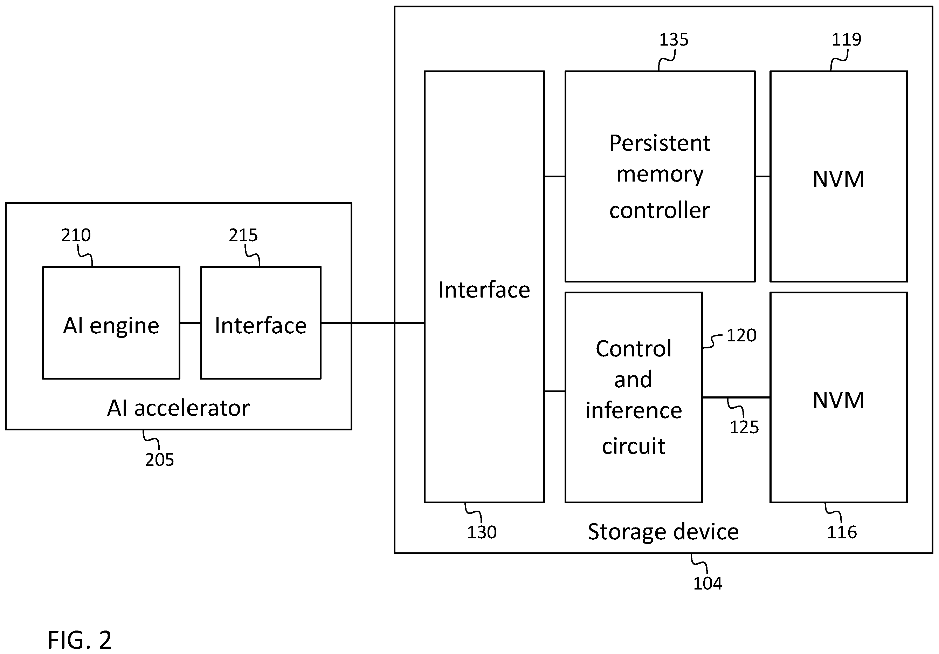

FIG. 2 shows an embodiment in which the persistent storage device 104 is connected to an artificial intelligence accelerator 205 in accordance with some example embodiments of the disclosure. The artificial intelligence accelerator 205 may include an artificial intelligence engine 210 (or "artificial intelligence processing circuit") and an accelerator interface circuit 215. In operation, the artificial intelligence accelerator 205 may supervise and manage the performing of the inference operation, delegating operations to the persistent storage device 104 when doing so results in faster (or lower-power) operations.

For example, the control and inference circuit 120 of the persistent storage device 104 may, as mentioned above, be configured to perform multiplications and accumulations efficiently, but the control and inference circuit 120 may not have hardware capable of evaluating activation functions (which may, for example, require the calculation of an exponential function) in an amount of time, or for an amount of consumed energy, comparable to that used by a more general floating-point processor (for example, a CPU with a floating-point accelerator). In some embodiments, the artificial intelligence accelerator 205 (for example, the artificial intelligence engine 210 of the artificial intelligence accelerator 205) may include (i) general purpose computation hardware (for example, a floating-point processor) or (ii) dedicated hardware (such as an application-specific integrated circuit (ASIC), a field programmable gate array (FPGA), or a coprocessor) for performing such calculations (for example, the calculation of an activation function).

As such, in such an embodiment, the artificial intelligence accelerator 205 may, for each layer of the neural network, instruct the persistent storage device 104 to compute, for each artificial neuron of the layer, the sum of products of weights and elements of the input feature map, and return the sum to the artificial intelligence accelerator 205, which may then compute the activation for each artificial neuron of the layer. This set of activations may then become the elements of the input feature map for the next layer of the neural network.

In some embodiments, a number of stacks up to a predetermined threshold (for example, 16 stacks) such as those shown in FIG. 1E may be included in one package, resulting in a wideband data connection 125 with a bandwidth of up to a predetermined threshold (for example, 300 gigabytes per second) for sequential read operations. In some embodiments, the persistent storage device 104 is capable of performing, in the control and inference circuit 120, (i) pruning (the skipping of products in which one or both factors are less than a threshold), sparsity (the skipping of products in which one or both factors are zero), compression (encoding using a coding method (for example, an entropy code) that reduces the storage space occupied), quantization (mapping values to a set of more coarsely spaced discrete values), or approximation (computing an approximate product when doing so can be done more quickly or using less energy), or (ii) an offload of neural network layers or operations (for example multi head attention, a processing method involving multiple parallel passes through an attention mechanism). In some embodiments, the persistent storage device 104 is capable of performing an entire inference operation, or a partial inference operation (for example, an inference operation for one layer at a time of a neural network).

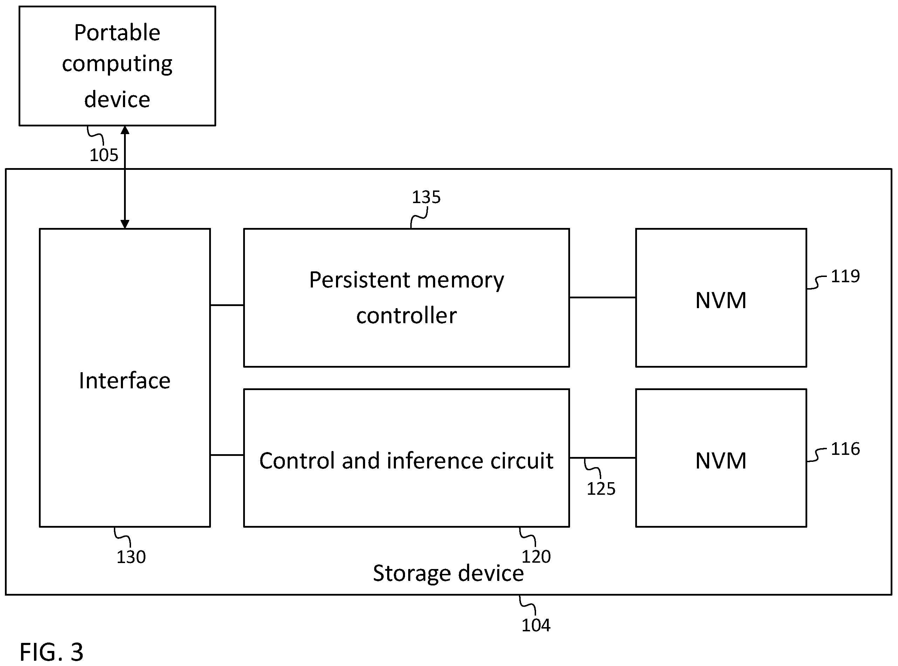

In some embodiments, as illustrated in FIG. 3 (which shows a system level diagram of a portable computing device and a persistent storage device having inference capabilities in accordance with some example embodiments of the disclosure), the persistent storage device 104 is configured to be connected to a portable computing device 105 (for example, a laptop computer, a tablet computer, or a mobile telephone). For example, the persistent storage device 104 may have the form factor of a dongle (for example, with a Universal Serial Port (USB)) connector. Such an embodiment may allow a laptop computer, a tablet computer, or a mobile telephone which may not have sufficient processing power to perform an inference operation of a large neural network in an acceptable amount of time, to greatly accelerate the ability of the laptop computer, the tablet computer, or the mobile telephone to perform such inference operations by offloading some (for example, one layer at a time) or all of the inference operation to the persistent storage device 104.

Some embodiments are generally applicable to any hardware device (existing or future) as a built-in chip or dongle (or other plug-in form factor, such a card with a suitable connector). The wideband data connection 125 of the persistent storage device 104 may be used to read the artificial intelligence model from the non-volatile memory 116 to the control and inference circuit 120. In embodiments in which a dongle form factor is employed, the input information such as a user language query (which may be a sound file containing spoken words) or input image may be transferred to the dongle through a Universal Serial Bus (or other suitable connection) and only the output result (for example, an output from a Generative Pre-Trained Transformer, or other inference output) may be sent back to the host 102 (for example, to the portable computing device).

In some embodiments, a workflow may include (i) input (for example, elements of an input feature map) being fed from outside (for example, from a host 102 or from an artificial intelligence accelerator 205) to the random-access memory 123, (ii) partial weights being read from the non-volatile memory 116 to the random-access memory 123, through the wideband data connection 125, (iii) inference operations (for example, multiplications and accumulations) being performed by the control and inference circuit 120, (iv) steps (ii) and (iii) being repeated until the last inference operation has been performed, and (v) storing of the result or results (for example, the activations) in the random-access memory 123.

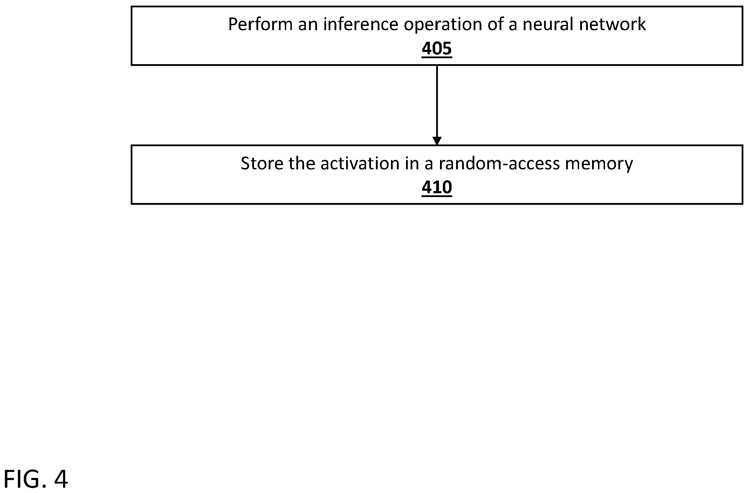

FIG. 4 shows a flow chart of a method in accordance with some example embodiments of the disclosure. The method includes: performing, at 405, an inference operation of a neural network. The performing may include: reading a weight from a persistent memory into a random-access memory; multiplying the weight by an element of an input feature map to form a first product; and calculating an activation based on the first product. The reading of the weight from the persistent memory into the random-access memory may include reading the weight from the persistent memory into the random-access memory through a wideband data connection. The method further includes storing, at 410,the activation in the random-access memory. The performing of the inference operation may include performing the inference operation in a system including the persistent memory and a control and inference circuit. The control and inference circuit may be connected to the persistent memory by the wideband data connection. The control and inference circuit may include a persistent memory controller and a multiply-accumulate circuit.

As used herein, "a portion of" or "part of" something means "at least some of" the thing, and as such may mean less than all of, or all of, the thing. As such, "a portion of" a thing or "part of" a thing includes the entire thing as a special case, i.e., the entire thing is an example of a portion of the thing or of part of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1 +Y/100) times the first number. As used herein, the term "or" should be interpreted as "and/or", such that, for example, "A or B" means any one of "A" or "B" or "A and B".

The background provided in the Background section of the present disclosure section is included only to set context, and the content of this section is not admitted to be prior art. Any of the components or any combination of the components described (for example, in any system diagrams included herein) may be used to perform one or more of the operations of any flow chart included herein. Further, (i) the operations are example operations, and may involve various additional steps not explicitly covered, and (ii) the temporal order of the operations may be varied.

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (for example, an adjustment) or a first quantity (for example, a first variable) is referred to as being "based on" a second quantity (for example, a second variable) it means that the second quantity is an input to the method or influences the first quantity, for example, the second quantity may be an input (for example, the only input, or one of several inputs) to a function that computes the first quantity, or the first quantity may be equal to the second quantity, or the first quantity may be the same as (for example, stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

Spatially relative terms, such as "beneath", "below", "lower", "under", "above", "upper" and the like, may be used herein for ease of description to describe one element or feature's relationship to another element(s) or feature(s) as illustrated in the figures. It will be understood that such spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (for example, rotated 90 degrees or at other orientations) and the spatially relative descriptors used herein should be interpreted accordingly. In addition, it will also be understood that when a layer is referred to as being "between" two layers, it can be the only layer between the two layers, or one or more intervening layers may also be present.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or computed values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Similarly, a range described as "within 35% of 10" is intended to include all subranges between (and including) the recited minimum value of 6.5 (i.e., (1 - 35/100) times 10) and the recited maximum value of 13.5 (i.e., (1 + 35/100) times 10), that is, having a minimum value equal to or greater than 6.5 and a maximum value equal to or less than 13.5, such as, for example, 7.4 to 10.6. Any maximum numerical limitation recited herein is intended to include all lower numerical limitations subsumed therein and any minimum numerical limitation recited in this specification is intended to include all higher numerical limitations subsumed therein.

It will be understood that when an element is referred to as being "directly connected" or "directly coupled" to another element, there are no intervening elements present. As used herein, "generally connected" means connected by an electrical path that may contain arbitrary intervening elements, including intervening elements the presence of which qualitatively changes the behavior of the circuit. As used herein, "connected" means (i) "directly connected" or (ii) connected with intervening elements, the intervening elements being ones (for example, low-value resistors or inductors, or short sections of transmission line) that do not qualitatively affect the behavior of the circuit.

Some embodiments may include features of the following numbered statements.
1. A system, comprising:
   a first persistent memory; and
   a control and inference circuit,
   wherein:
      the first persistent memory is connected to the control and inference circuit by a wideband data connection; and
      the control and inference circuit is configured to perform arithmetic operations.
2. The system of statement 1, wherein the wideband data connection has a bandwidth of at least 10 gigabytes per second.
3. The system of any one of the preceding statements, wherein:
   the control and inference circuit comprises a first persistent memory controller;
   the system further comprises:
      an interface circuit,
      a second persistent memory, and
      a second persistent memory controller;
   the second persistent memory is connected to the second persistent memory controller;
   the control and inference circuit is connected to the interface circuit; and
   the second persistent memory controller is connected to the interface circuit.
4. The system of any one of the preceding statements, further comprising:
   a Universal Flash Storage interface circuit,
   wherein:
      the control and inference circuit is connected to the Universal Flash Storage interface circuit.
5. The system of statement 1, further comprising:
   a Universal Flash Storage interface circuit,
   a second persistent memory, and
   a second persistent memory controller,
   wherein:
      the control and inference circuit comprises a first persistent memory controller,
      the control and inference circuit is connected to the Universal Flash Storage interface circuit, and
      the second persistent memory is connected to the Universal Flash Storage interface circuit.
6. The system of any one of the preceding statements, further comprising:
   a second persistent memory, and
   a second persistent memory controller,
   wherein:
      the control and inference circuit comprises a first persistent memory controller,
      the first persistent memory comprises a flash memory,
      the second persistent memory comprises a flash memory,
      the first persistent memory controller comprises a first flash memory controller, and
      the second persistent memory controller comprises a second flash memory controller.
7. The system of any one of the preceding statements, wherein the wideband data connection comprises a Peripheral Component Interconnect Express (PCIe) connection.
8. The system of any one of the preceding statements, further comprising:
   a first interface circuit, and
   an artificial intelligence accelerator,
   the artificial intelligence accelerator comprising an artificial intelligence processing circuit and a second interface circuit,
   wherein:
      the first interface circuit is connected to the second interface circuit,
      the artificial intelligence accelerator is configured to perform inference operations of a neural network, with assistance from:
         the first persistent memory, and
         the control and inference circuit.
9. The system of any one of the preceding statements, further comprising:
   a first interface circuit, and
   an artificial intelligence accelerator connected to the first interface circuit,
   wherein:
      the artificial intelligence accelerator is configured to perform inference operations of a neural network, with assistance from:
         the first persistent memory, and
         the control and inference circuit; and
      the first persistent memory and the control and inference circuit are configured to perform an operation selected from the group consisting of pruning, sparsity, compression, quantization, and approximation.
10. The system of any one of the preceding statements, wherein:
   the first persistent memory is part of a first semiconductor die; and
   the control and inference circuit is part of a second semiconductor die.
11. The system of any one of the preceding statements, wherein:
   the first persistent memory is part of a first semiconductor die;
   the control and inference circuit is part of a second semiconductor die; and
   the first semiconductor die and the second semiconductor die are part of a stack of dies.
12. The system of any one of the preceding statements, comprising a random-access memory,
   wherein:
   the first persistent memory is part of a first semiconductor die;
   the control and inference circuit is part of a second semiconductor die;
   the random access memory is part of a third semiconductor die; and
   the first semiconductor die, the second semiconductor die, and the third semiconductor die are part of a stack of dies.
13. The system of any one of the preceding statements, comprising a random-access memory,
   wherein:
   the first persistent memory is part of a first semiconductor die;
   the control and inference circuit is part of a second semiconductor die;
   the random-access memory is part of a third semiconductor die; and
   the first semiconductor die is stacked on:
      the second semiconductor die, and
      the third semiconductor die.
14. The system of any one of the preceding statements, comprising a random-access memory,
   wherein:
   the control and inference circuit comprises:
      a persistent memory controller; and
      a multiply-accumulate circuit;
   the first persistent memory is part of a first semiconductor die;
   the persistent memory controller is part of a second semiconductor die;
   the multiply-accumulate circuit is part of a third semiconductor die;
   the random-access memory is part of a fourth semiconductor die; and
   the first semiconductor die is stacked on:
      the second semiconductor die,
      the third semiconductor die, and
      the fourth semiconductor die.
15. A method, comprising:
   performing an inference operation of a neural network,
   the performing comprising:
      reading a weight from a persistent memory into a random-access memory;
      multiplying the weight by an element of an input feature map to form a first product; and
      calculating an activation based on the first product,
   wherein the reading of the weight from the persistent memory into the random-access memory comprises reading the weight from the persistent memory into the random-access memory through a wideband data connection.
16. The method of statement 15, further comprising storing the activation in the random-access memory.
17. The method of statement 15 or statement 16, wherein:
   the performing of the inference operation comprises performing the inference operation in a system comprising:
      the persistent memory, and
      a control and inference circuit;
   the control and inference circuit is connected to the persistent memory by the wideband data connection; and
   the control and inference circuit comprises:
      a persistent memory controller; and
      a multiply-accumulate circuit.
18. A device, comprising:
   a connector;
   a first persistent memory; and
   a control and inference circuit,
   wherein:
      the first persistent memory is connected to the control and inference circuit by a wideband data connection; and
      the connector is suitable for connecting the device to a mobile computing device.
19. The device of statement 18, wherein:
   the control and inference circuit comprises a first persistent memory controller;
   the device further comprises:
      an interface circuit,
      a second persistent memory, and
      a second persistent memory controller;
   the second persistent memory is connected to the second persistent memory controller;
   the control and inference circuit is connected to the interface circuit; and
   the second persistent memory controller is connected to the interface circuit.
20. The device of statement 18 or statement 19, wherein:
   the first persistent memory and the control and inference circuit are configured to perform an operation selected from the group consisting of pruning, sparsity, compression, quantization, and approximation.
21. The device of claim 18, wherein:
   the first persistent memory is part of a first semiconductor die; and
   the control and inference circuit is part of a second semiconductor die.

Although exemplary embodiments of a system and method for in-storage inference have been specifically described and illustrated herein, many modifications and variations will be apparent to those skilled in the art. Accordingly, it is to be understood that a system and method for in-storage inference constructed according to principles of this disclosure may be embodied other than as specifically described herein. The invention is also defined in the following claims.

## Claims

1. A system, comprising:
a first persistent memory; and
a control and inference circuit,
wherein:
the first persistent memory is connected to the control and inference circuit by a wideband data connection; and
the control and inference circuit is configured to perform arithmetic operations.

2. The system of claim 1, wherein:
the control and inference circuit comprises a first persistent memory controller;
the system further comprises:
an interface circuit,
a second persistent memory, and
a second persistent memory controller;
the second persistent memory is connected to the second persistent memory controller;
the control and inference circuit is connected to the interface circuit; and
the second persistent memory controller is connected to the interface circuit.

3. The system of claim 1, further comprising:
an interface circuit,
wherein:
the interface circuit comprises a serial interface; and
the control and inference circuit is connected to the interface circuit.

4. The system of claim 3, further comprising:
a second persistent memory; and
a second persistent memory controller,
wherein:
the control and inference circuit comprises a first persistent memory controller; and
the second persistent memory is connected to the interface circuit.

5. The system of claim 1, further comprising:
a second persistent memory, and
a second persistent memory controller,
wherein:
the control and inference circuit comprises a first persistent memory controller,
the first persistent memory comprises a flash memory,
the second persistent memory comprises a flash memory,
the first persistent memory controller comprises a first flash memory controller, and
the second persistent memory controller comprises a second flash memory controller.

6. The system of claim 1, further comprising:
a first interface circuit, and
an artificial intelligence accelerator,
the artificial intelligence accelerator comprising an artificial intelligence processing circuit and a second interface circuit,
wherein:
the first interface circuit is connected to the second interface circuit,
the artificial intelligence accelerator is configured to perform inference operations of a neural network, with assistance from:
the first persistent memory, and
the control and inference circuit.

7. The system of claim 1, further comprising:
a first interface circuit, and
an artificial intelligence accelerator connected to the first interface circuit,
wherein:
the artificial intelligence accelerator is configured to perform inference operations of a neural network, with assistance from:
the first persistent memory, and
the control and inference circuit; and
the first persistent memory and the control and inference circuit are configured to perform an operation selected from the group consisting of pruning, sparsity, compression, quantization, and approximation.

8. The system of any one of claims 1 to 7, wherein:
the first persistent memory is part of a first semiconductor die; and
the control and inference circuit is part of a second semiconductor die.

9. The system of claim 8, wherein:
the first semiconductor die and the second semiconductor die are part of a stack of dies.

10. The system of claim 8, comprising a random-access memory, wherein:
the random access memory is part of a third semiconductor die; and
the first semiconductor die, the second semiconductor die, and the third semiconductor die are part of a stack of dies.

11. The system of claim 8, comprising a random-access memory, wherein:
the random-access memory is part of a third semiconductor die; and
the first semiconductor die is stacked on:
the second semiconductor die, and
the third semiconductor die.

12. The system of any one of claims 1 to 7, comprising a random-access memory,
wherein:
the control and inference circuit comprises:
a persistent memory controller; and
a multiply-accumulate circuit;
the first persistent memory is part of a first semiconductor die;
the persistent memory controller is part of a second semiconductor die;
the multiply-accumulate circuit is part of a third semiconductor die;
the random-access memory is part of a fourth semiconductor die; and
the first semiconductor die is stacked on:
the second semiconductor die,
the third semiconductor die, and
the fourth semiconductor die.

13. The system of any one of claims 1 to 12, wherein the wideband data connection comprises a serial connection.

14. A method, comprising:
performing an inference operation of a neural network,
the performing comprising:
reading a weight from a persistent memory into a random-access memory;
multiplying the weight by an element of an input feature map to form a first product; and
calculating an activation based on the first product,
wherein the reading of the weight from the persistent memory into the random-access memory comprises reading the weight from the persistent memory into the random-access memory through a wideband data connection.

15. The method of claim 14, further comprising storing the activation in the random-access memory.
